# EUROPÄISCHE PATENTSCHRIFT

(11) **EP 2 125 424 B1**
(45) Veröffentlichungstag und Bekanntmachung des Hinweises auf die Patenterteilung: **30.11.2016**
(21) Anmeldenummer: 08707044.7
(22) Anmeldetag: 15.01.2008
(51) Int. Cl.: B60N 2/02, B60N 2/22

(54) **RÜCKENLEHNE FÜR EINEN FAHRZEUGSITZ MIT NEIGUNGSVERSTELLBAREM LEHNENKOPF**
BACKREST FOR A VEHICLE SEAT WITH A TILT ADJUSTABLE UPPER SEAT BACK
DOSSIER POUR SIÈGE DE VÉHICULE COMPRENANT UN APPUI-TÊTE RÉGLABLE EN INCLINAISON

(30) Priorität: 31.01.2007 DE 102007004767
(43) Veröffentlichungstag der Anmeldung: 02.12.2009
(73) Patentinhaber: Bayerische Motoren Werke Aktiengesellschaft, 80809 München (DE)
(72) Erfinder: GRABER, Ulrich, 85307 Paunzhausen (DE); NORDBERG, Peter, 85774 Unterföhring (DE); RINGER, Jürgen, 84072 Au (DE); JENDROL, Stanislav, 80935 München (DE)
(86) Internationale Anmeldenummer: PCT/EP2008/000242
(87) Internationale Veröffentlichungsnummer: WO 2008/092556

(56) Entgegenhaltungen:
- EP-A- 1 095 815
- DE-A1- 19 754 311

## Beschreibung

Die Erfindung betrifft eine Rückenlehne für einen Fahrzeugsitz mit einem Lehnenrahmen, der von einer Abdeckung umgeben ist und der einen neigungsverstellbaren Lehnenkopf aufweist.

Aus dem Stand der Technik sind solche Rückenlehnen in vielen unterschiedlichen Ausführungsformen bekannt. Beispielsweise ist aus der DE 199 10 666 A1 ein Fahrzeugsitz bekannt, der einen Sitzteil, eine Rückenlehne und eine Kopfstütze aufweist. Die Rückenlehne ist in zwei um eine horizontale Achse gegeneinander schwenkbare Lehnenteile aufgeteilt. Der obere Lehnenteil trägt dabei eine höhenverstellbare Kopfstütze. Die in der DE 199 10 666 A1 offenbarte Rückenlehne ist so ausgestaltet, dass sie bei einem Heckaufprall den oberen Lehnenteil gegen den unteren Lehnenteil nach vorne verkippt. Dazu wird beim Heckaufprall durch den sich auf dem Fahrzeugsitz befindlichen Insassen ein Druck auf einen Mechanismus im unteren Bereich des unteren Lehnenteils ausgeübt, der dann dazu führt, dass der obere Lehnenteil mit samt der daran befindlichen Kopfstütze nach vorne geschwenkt wird. Nachteilig daran ist, dass mit vertretbarem Konstruktionsaufwand eine solche Ausführungsform nicht bei einem Gurtintegralsitz, bei dem ein Gurtumlenker am oberen Lehnenteil angeordnet ist, eingesetzt werden kann, da bei einem Aufprall der Insasse mit enormen Kräften in den Gurt gedrückt wird und diese damit auf die Schwenkvorrichtung zwischen oberem und unteren Lehnenteil wirken. Dann müssten die Verstell- und Arretiervorrichtungen zwischen oberem und unterem Lehnenteil sehr massiv ausgeführt sein.

Eine andere aus dem Stand der Technik bekannte Möglichkeit, den oberen Rückenlehnenteil-also im Bereich des Schulterblatts-gegenüber dem unteren Rückenlehnenteil in seiner Neigung zu verstellen, beruht auf einem vollständig anderen Prinzip. Bei solchen Sitzen wird ein einheitlicher Lehnenrahmen verwendet, der sich über beide vorgenannten Bereiche der Rückenlehne erstreckt. Im oberen Bereich der Rückenlehne sind dann Schwellkörper angeordnet, die mit Luft befüllt oder entlüftet werden können. Dadurch wird die Neigung des oberen Lehnenteils gegenüber dem unteren Lehnenteil verändert, je nach dem, wie viel Luft in dem jeweiligen Schwellkörper vorhanden ist. Da hierbei ein einstückiger Lehnenrahmen verwendet wird, kann an diesem ein Gurtumlenker befestigt werden, da keine mechanisch sehr stabile Schwenkachse zwischen zwei Rahmenteilen vorhanden sein muss. Dadurch kann eine solche Konstruktion auch bei einem Gurtintegralsitz verwendet werden. Nachteilig daran ist jedoch, dass sie sehr ineffektiv und langsam ist. Darüber hinaus können auch nur in Teilbereichen Klimafunktionen im Fahrzeugsitz realisiert werden.

DE-A-197 54 311 betrifft eine Rückenlehne, an der in einem oberen Bereich ein Kopfstützenträger verschwenkbar angeordnet ist.

Der Erfindung liegt die Aufgabe zugrunde, eine Rückenlehne mit neigungsverstellbarem Lehnenkopf anzugeben, die sowohl hohe Gurtlasten aushält als auch schnell anpassbar ist und keine Beschränkung von Klimafunktionen nach sich zieht.

Diese Aufgabe wird durch eine Rückenlehne mit den Merkmalen des Patentanspruchs 1 gelöst. Vorteilhafte Ausgestaltungen der Erfindung sind Gegenstand der Unteransprüche.

Dadurch, dass ein Zusatzrahmen an der ansonsten durchgängigen und einstückigen Rückenlehne-insbesondere ein einstückiger Lehnenrahmen-angebracht wird, ist es möglich, auch einen Gurtumlenker am hohe Gurtkräfte aufnehmenden Lehnenrahmen anzuordnen. Die schwenkbare Anlenkung des Zusatzrahmens an einem Seitenblech, der Abdeckung oder dem Lehnenrahmen kann sehr einfach ausgeführt werden, da sie keinerlei Gurtkräfte aufnehmen muss. Dadurch, dass der Zusatzrahmen in unterschiedlichen Winkelstellungen zum Lehnenrahmen festlegbar ist, ist eine gute Flexibilität bei der individuellen Einstellung auf den aktuellen Insassen gewährleistet. Es ergibt sich damit ein variabler Spalt zwischen der Zusatzabdeckung des Zusatzrahmens und der Abdeckung des Lehnenrahmens. Dieser kann in einer Extremposition bis auf Null verringert werden.

Weitere Vorteile und Einzelheiten der Erfindung werden anhand des in der Zeichnung dargestellten Ausführungsbeispiels erläutert. Es zeigen:
- Figur 1: eine Seitenansicht des oberen Teils einer Rückenlehne, wobei der neigungsverstellbare Lehnenkopf in einer ersten Extremposition dargestellt ist,
- Figur 2: eine schräge perspektivische Ansicht der gesamten Rückenlehne, wobei sich der neigungsverstellbare Lehnenkopf in der in Figur 1 dargestellten Position befindet,
- Figur 3: eine Seitenansicht des oberen Teils der Rückenlehne wie in Figur 1, wobei sich der neigungsverstellbare Lehnenkopf in seiner zweiten Extremposition befindet,
- Figur 4: eine schräge perspektivische Ansicht der gesamten Rückenlehne wie in Figur 2, jedoch mit dem neigungsverstellbaren Lehnenkopf in seiner zweiten Extremposition wie in Figur 3, und
- Figur 5: eine vergrößerte Darstellung der Rückenlehne im Bereich des neigungsverstellbaren Lehnenkopfes gemäß Figur 4, jedoch mit Abdeckungen dargestellt.

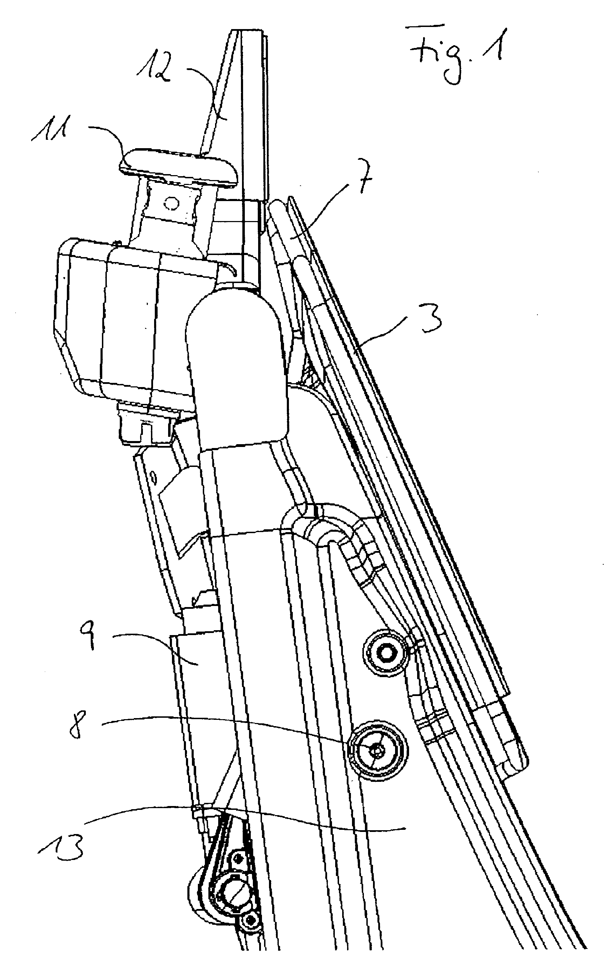

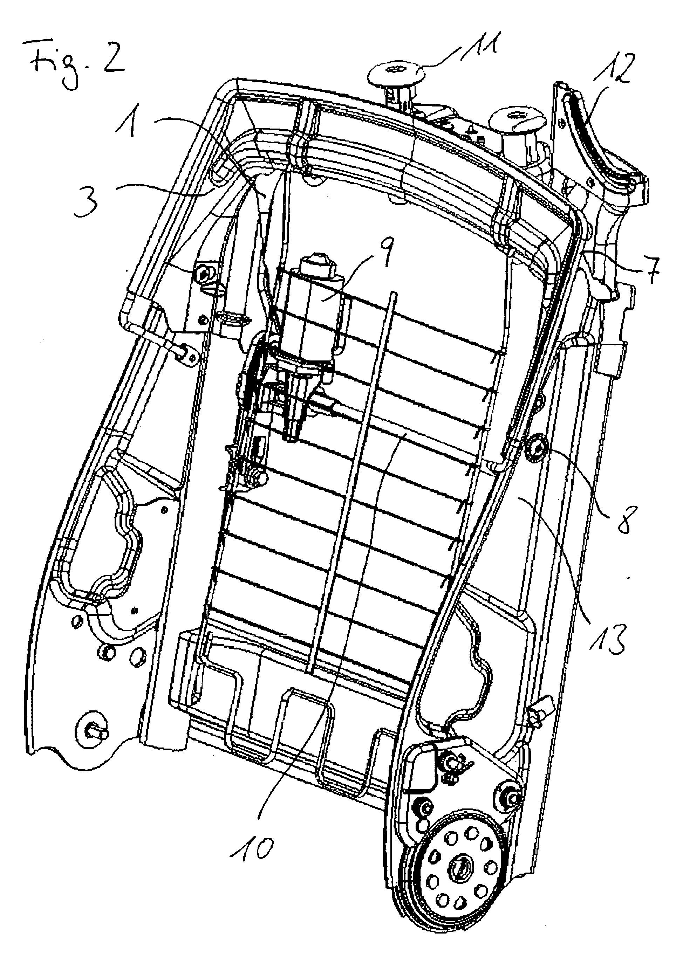

In den Figuren 1 und 2 ist ein Ausführungsbeispiel einer erfindungsgemäßen Rückenlehne dargestellt. Figur 1 ist dabei ein vergrößerter Ausschnitt der Figur 2, wobei die Blickrichtungen unterschiedlich sind. In Figur 1 handelt es sich um eine seitliche Ansicht und in Figur 2 eine perspektivische Schrägansicht von vorne. Der Übersichtlichkeit halber sind alle Abdeckungsteile sowie die Kopfstütze entfernt.

Die dargestellte Rückenlehne weist einen konventionellen, d.h. einen aus dem Stand der Technik bekannten Teil auf. Hierbei handelt es sich um einen durchgängigen einstückigen Lehnenrahmen 1, der eine Rohrform aufweist. Es ist genauso gut möglich, den Lehnenrahmen 1 z.B. auf der Basis gepresster Profile auszubilden oder jede andere übliche Art von Lehnenrahmen 1. An den beiden Seiten des Lehnenrahmens 1 sind Seitenbleche 13 angeordnet. Im oberen Bereich des Lehnenrahmens 1 ist eine Haltevorrichtung für die Kopfstütze angebracht. Diese weist zwei Kopfstützenhülsen 11 auf, in die die Kopfstütze (nicht dargestellt) von oben eingeschoben wird und in unterschiedlichen Höhen-auf die Größe des Insassen abgestimmt-festlegbar ist. Darüber hinaus ist im oberen Bereich an einer der Ecken des Lehnenrahmens 1 ein Gurtumlenker 12 angebracht. Dadurch ergibt sich sowohl für die Kopfstütze als auch für den Gurtumlenker 12, dass diese fest mit dem einstückigen Lehnenrahmen 1 verbunden sind, der die Kräfte bei einem Aufprall abfängt-sowohl die Gurtkräfte als auch die Kräfte, die der Kopf des Insassen auf die Kopfstütze ausübt.

Zusätzlich zu diesen bekannten Elementen weist die erfindungsgemäße Rückenlehne noch einen Zusatzrahmen 3 auf. Dieser Zusatzrahmen 3 ist mit der Rückenlehne über eine Schwenkachse 8 verbunden. Die Schwenkachse 8 wird durch zwei Lager-je eines in jeder der beiden Seitenbleche 13-realisiert. Der Zusatzrahmen 3 ist im Wesentlichen U-förmig ausgebildet, wobei die freien Enden des "U' mit der Schwenkachse 8 verbunden sind. Der Zusatzrahmen 3 ist dabei so angeordnet, dass er sich von der Schwenkachse 8 nach oben erstreckt. Die Schwenkachse 8 ist im Wesentlichen horizontal ausgebildet, so dass der Zusatzrahmen 3 wie die bekannten neigungsverstellbaren Lehnenköpfe vollständig im Bereich des Schulterblatts in ergonomischer Art und Weise geschwenkt werden kann.

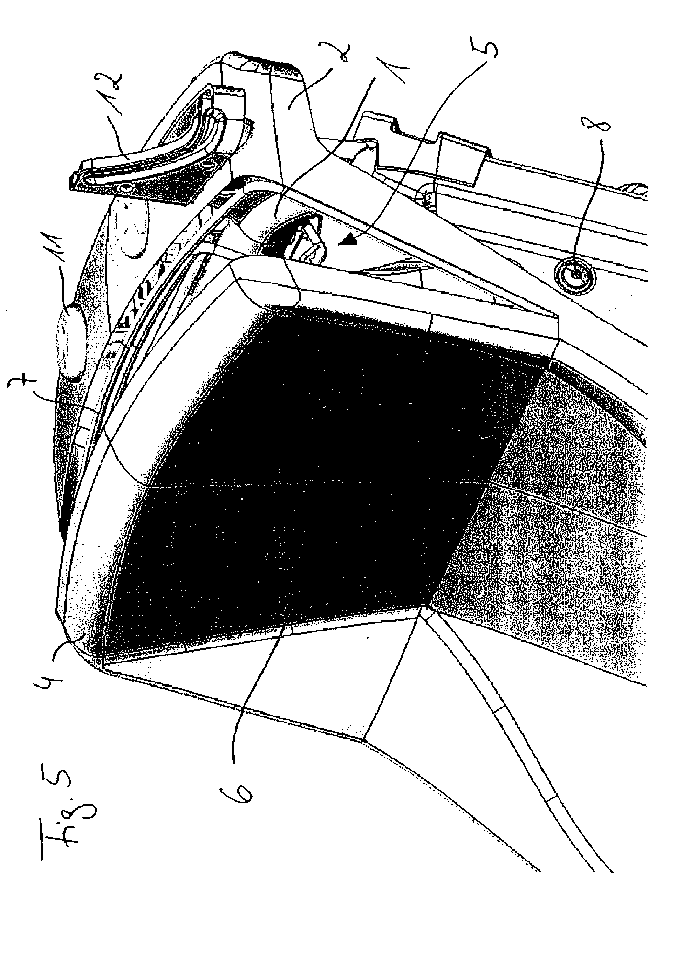

Dargestellt ist nicht nur allein der Zusatzrahmen 3, sondern auch damit fest verbundene Träger- bzw. Befestigungselemente. Mit diesen wird eine Verbindung zu der Polsterung der Rückenlehne (nicht dargestellt) erreicht und an ihr wird auch ein Bezug 6 (siehe Figur 5) befestigt.

Die Schwenkbewegung des Zusatzrahmens 3 gegenüber dem Lehnenrahmen 1 wird mittels eines Motors 9 erreicht, der innerhalb der Rückenlehne angeordnet ist. Hierfür wird beispielsweise ein Schrittmotor verwendet. Es kann jedoch auch jeder andere Motor verwendet werden. Der Motor ist über eine Übertragungsachse 10 mit den beiden Scharnieren der Schwenkachse 8 verbunden und treibt beide Seiten-also die freien Enden des "U'-des Zusatzrahmens 3 an.

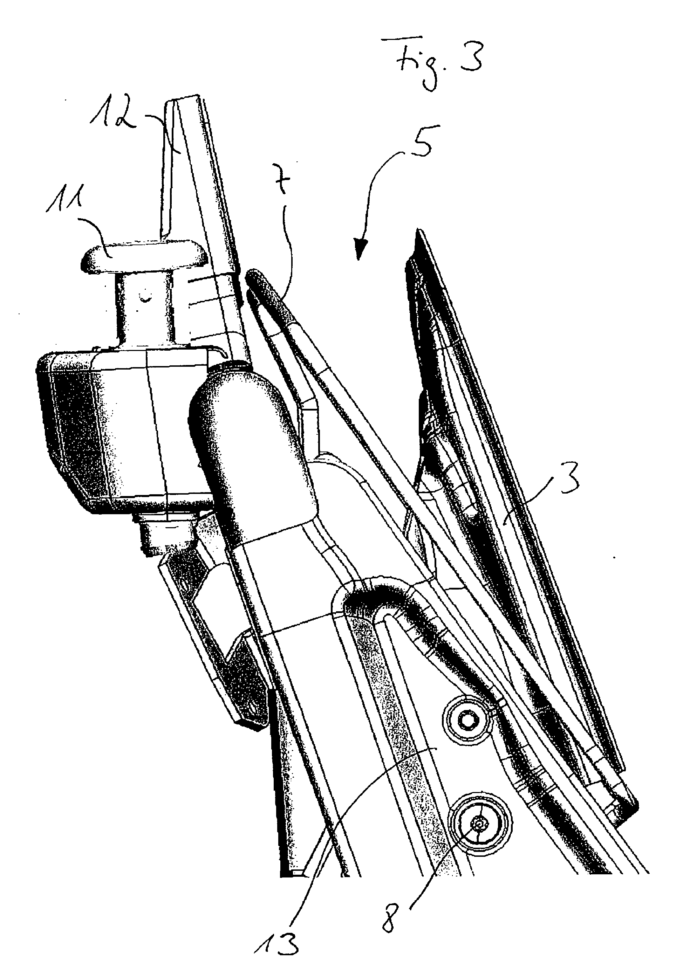

In den Figuren 1 und 2 ist eine erste Extremstellung des Zusatzrahmens 3 bezüglich des Lehnenrahmens 1 dargestellt. Der Zusatzrahmen 3 ist dabei so nahe wie möglich an den Lehnenrahmen 1 heranbewegt. Mit dem Lehnenrahmen 1 ist ein Tragbügel 7 verbunden, dessen Funktion näher im Rahmen der Figuren 3 bis 5 beschrieben wird.

Der Motor 9 ist über eine Leitung (nicht dargestellt) mit einer Fernsteuervorrichtung (nicht dargestellt) verbunden. Diese kann beispielsweise an einem sich unterhalb der Rückenlehne anschließenden Sitzteil (nicht dargestellt) angeordnet sein. An einer solchen Stelle sind bei den meisten Fahrzeugsitzen sämtliche Steuerknöpfe für die Bewegungsmöglichkeiten der Rückenlehne-beispielsweise Schwenken der gesamten Rückenlehne an ihrem Scharnier zwischen dieser und dem Sitzteil oder auch Einstellung der Sitzkissentiefe oder der Sitzkissenhöhe usw.-angeordnet. Es ist genauso gut möglich, den Motor 9 auch von einer anderen Position im Fahrzeug zu steuern, beispielsweise vom Armaturenbrett oder einem Schalter am Lenkrad. Denkbar ist es auch, dass der Motor 9 nicht über eine Leitung mit einer Fernsteuereinrichtung verbunden ist, sondern die Steuersignale mittels kabelloser Verbindung empfängt.

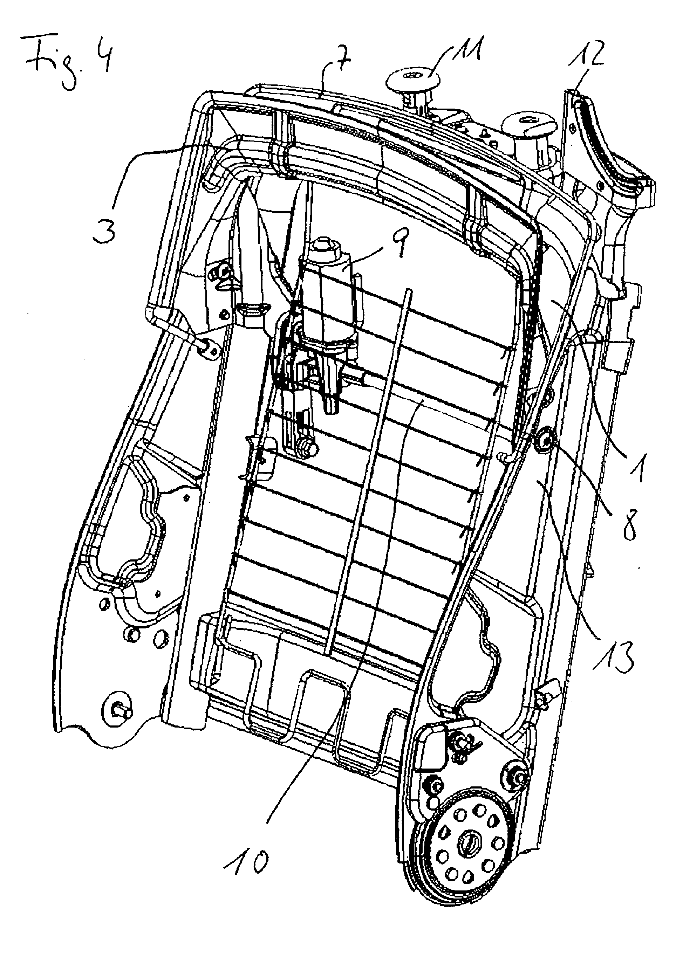

Die Darstellungen der Figuren 3 und 4 entsprechen prinzipiell denjenigen der Figuren 1 und 2 (sowohl bzgl. der Blickwinkel als auch bzgl. der dargestellten Elemente). Der Unterschied zu den Figuren 1 und 2 besteht darin, dass der Zusatzrahmen 3 in seiner zweiten Extremposition bezüglich des Lehnenrahmens 1 dargestellt ist.

Der Zusatzrahmen 3 wurde von seiner ersten Extremposition, die in den Figuren 1 und 2 dargestellt ist, in seine zweite Extremposition, die in den Figuren 3 und 4 dargestellt ist, mittels der Übertragungsachse 10 bewegt. Die Übertragungsachse 10 wurde durch den Motor 9 angetrieben. Da es sich hierbei um eine gängige Bewegung einer in einem Scharnier rotatorisch gelagerten Vorrichtung handelt, wird nicht näher beschrieben, wie diese Bewegung erfolgt ist.

Bei der Bewegung des Zusatzrahmens 3 von seiner ersten Extremposition (Figuren 1 und 2) in seine zweite Extremposition (Figuren 3 und 4) öffnet sich zwischen dem Lehnenrahmen 1, der feststeht, und dem Zusatzrahmen 3, der geschwenkt wird, ein Spalt 5. Dieser Spalt 5 muss zum einen aus ästhetischen Gründen und zum anderen aus Sicherheitsgründen ständig überdeckt sein, da ansonsten ein Einklemmen von Körperteilen zu besorgen wäre.

Zur Beschreibung, wie dieses Problem gelöst wird, wird zusätzlich auf die Figur 5 Bezug genommen, die die Rückenlehne in der Ansicht und der Stellung des Zusatzrahmens 3 gemäß Figur 4 zeigt. Im Gegensatz zu Figur 4 ist hier jedoch nur ein Ausschnitt im oberen Bereich der Rückenlehne, also im Bereich, in dem die Schulterblätter des insassen anliegen, dargestellt. Darüber hinaus ist am Lehnenrahmen 1 eine Abdeckung 2 angebracht. Am Zusatzrahmen 3 ist eine Zusatzabdeckung 4 angebracht. Mit der Zusatzabdeckung 4 ist ein Bezug 6 der Rückenlehne verbunden.

Zur Überdeckung des Spalts 5 wird ein Bezuglappen verwendet. Dieser ist in keiner der Figuren 1 bis 5 dargestellt. Er ist fest mit der Zusatzabdeckung 4 des Zusatzrahmens 3 verbunden. Somit bewegt sich beim Schwenken des Zusatzrahmens 3 auch seine Befestigungsfläche gegenüber der Abdeckung 2 des Lehnenrahmens 1. Um die unterschiedliche Breite des Spalts 5 auszugleichen, wird der Bezuglappen über den in allen fünf Figuren dargestellten Drahtbügel 7 geführt. Hierfür ist zwischen diesem Drahtbügel 7 und der Abdeckung 2 des Lehnenrahmens 1 ein schmaler Durchlass ausgebildet, der mindestens gerade die Dicke des Bezuglappens aufweist. Der Bezuglappen wird um den Drahtbügel 7 herum umgelenkt und z.B. mittels Gummibändern gespannt. Alternativ können auch alle anderen möglichen kraftaufbringenden Mittel verwendet werden. Die Gummibänder sind zum einen mit dem Bezuglappen verbunden und zum anderen mit dem feststehenden Teil der Rückenlehne, also beispielsweise mit den Seitenblechen 13, der Abdeckung 2 oder ähnlichem. Die Zugkraft der Gummibänder bewirkt, dass egal in welcher Position sich der Zusatzrahmen 3 gegenüber dem Lehnenrahmen 1 befindetwas jeweils unterschiedliche Größen des Spaltes 5 bedeutet-, der Bezuglappen immer gespannt bleibt und somit der Spalt 5 immer mit einer glatten Fläche überdeckt ist. Dies ist zum einen ästhetisch nötig und zum anderen auch dafür Voraussetzung, dass beim Schließen des Spalts 5 keine Körperteile eingeklemmt werden können. Eine solche Führung und Spannung des Bezuglappens ist prinzipiell aus dem Stand der Technik bekannt, so dass hier nicht noch näher darauf eingegangen wird. Als Bezuglappen kann bspw. sowohl ein Stück Leder als auch Stoff verwendet werden.

Wenn man von der Abbildung der Figur 5 ausgeht und sich vorstellt, wie sich der Spalt 5 durch Schwenken des Zusatzrahmens 3 mit samt der Zusatzabdeckung 4 langsam schließt, so erhält man in vollständig geschlossenem Zustand des Spalts 5 den ästhetischen Eindruck vermittelt, dass es sich um eine einstückige Gesamtabdeckung (zusammengesetzt aus der Abdeckung 2 und der Zusatzabdeckung 4) handelt. Außerdem ist in einem solchen Zustand garantiert, dass kein Körperteil zwischen Abdeckung 2 und Zusatzabdeckung 4 eindringen kann.

Zusammenfassend stellt sich die Erfindung in ihrem Kern so dar, dass durch die Verwendung eines Zusatzrahmens 3 eine Entkopplung der Neigungseinstellung des Lehnenkopfs von den auf den Lehnenrahmen 1 wirkenden Kräften-beispielsweise der Gurtkräfte-erzielt wird. Dadurch können sehr einfache und preiswerte Scharniere für die Ausgestaltung der Schwenkachse 8 verwendet werden. Auch der Motor 9 zum Antrieb der Schwenkachse 8 kann sehr einfach und preiswert ausgeführt sein. Eine Rückenlehne mit der erfindungsgemäßen Ausgestaltung kann auch schnell verstellt werden, wobei gleichzeitig eine Klimabelüftung integriert werden kann. Schließlich ist durch die Verwendung des ständig unter Spannung stehenden Bezuglappens gewährleistet, dass sowohl eine ästhetische Einheit in jeder Position des Zusatzrahmens 3 als auch eine Verhinderung des Einklemmens von Körperteilen in dem sich schließenden Spalt 5 gewährleistet sind.

## Patentansprüche

1. Rückenlehne für einen Fahrzeugsitz mit einem Lehnenrahmen (1), der von einer Abdeckung (2) umgeben ist und der einen individuell auf einen Insassen neigungsverstellbaren Lehnenkopf aufweist, wobei an einem Seitenblech (13) oder an der Abdeckung (2) oder dem Lehnenrahmen (1) ein Zusatzrahmen (3) schwenkbar um eine Schwenkachse (8) angelenkt ist, wobei die Schwenkachse (8) im oberen Bereich der Rückenlehne angeordnet ist und sich der Zusatzrahmen (3) von der Schwenkachse (8) in Einbaulage der Rückenlehne nach oben erstreckt, wobei der Zusatzrahmen (3) in unterschiedlichen Winkelstellungen zum Lehnenrahmen (1) festlegbar ist und somit ein variabler Spalt (5) zwischen einer Zusatzabdeckung (4) des Zusatzrahmens (3) und der Abdeckung (2) des Lehnenrahmens (1) besteht, **dadurch gekennzeichnet, dass** im oberen Bereich des Lehnenrahmens (1) eine Haltevorrichtung für eine Kopfstütze angebracht ist.

2. Rückenlehne nach Patentanspruch 1, **dadurch gekennzeichnet, dass** die Schwenkachse (8) in der Einbaulage der Rückenlehne im wesentlichen waagerecht verläuft.

3. Rückenlehne nach Patentanspruch 1 oder 2, **dadurch gekennzeichnet, dass** die Schwenkachse (8) von einem Motor (9) angetrieben wird, der in der Rückenlehne angeordnet ist und von einer Fernbedienung aus bedienbar ist.

4. Rückenlehne nach einem der Patentansprüche 1 bis 3, **dadurch gekennzeichnet, dass** der zwischen Zusatzrahmen (3) und Abdeckung (2) des Lehnenrahmens (1) veränderliche Spalt (5) durch einen Bezuglappen überdeckt ist.

5. Rückenlehne nach Patentanspruch 4, **dadurch gekennzeichnet, dass** der Bezuglappen fest mit einer Zusatzabdeckung (4) des Zusatzrahmens (3) verbunden ist und über mit der Rückenlehne verbundene Gummibänder oder Federn unabhängig von der Winkelstellung zwischen Zusatzrahmen (3) und Lehnenrahmen (1) ständig gespannt ist.

6. Rückenlehne nach Patentanspruch 5, **dadurch gekennzeichnet, dass** der Bezuglappen über einen mit der Rückenlehne, insbesondere der Abdeckung (2) des Lehnenrahmens (1), verbundenen Drahtbügel (7) umgelenkt wird.

7. Rückenlehne nach einem der Patentansprüche 1 bis 6, **dadurch gekennzeichnet, dass** die Zusatzabdeckung (4) und die Abdeckung (2) bei vollständig geschlossenem Spalt (5) im wesentlichen fluchtend miteinander ausgebildet sind.

8. Rückenlehne nach einem der Patentansprüche 1 bis 7, **dadurch gekennzeichnet, dass** am Lehnenrahmen (1) eine Vorrichtung mit einem Gurtumlenker (12) angeordnet ist.

9. Rückenlehne nach einem der Patentansprüche 1 bis 8, **dadurch gekennzeichnet, dass** der Zusatzrahmen (3) im Bereich des Schulterblatts angeordnet ist.

## Claims

1. A backrest for a vehicle seat having a backrest frame (1) which is encased by a cover (2) and which has an upper backrest, the inclination of which can be individually adapted to an occupant, wherein an additional frame (3) is linked swivelably about a swivel pin (8) on a side plate (13) or on the cover (2) or on the backrest frame (1), wherein the swivel pin (8) is arranged in the upper region of the backrest and the additional frame (3) extends upwards from the swivel pin (8) in the installed position of the backrest, wherein the additional frame (3) can be fixed in different angular positions relative to the backrest frame (1) and thus a variable gap (5) exists between an additional cover (4) of the additional frame (3) and the cover (2) of the backrest frame (1), **characterised in that** a holding device for a headrest is attached in the upper region of the backrest frame (1).

2. A backrest according to claim 1, **characterised in that** the swivel pin (8) extends substantially horizontally in the installed position of the backrest.

3. A backrest according to claim 1 or claim 2, **characterised in that** the swivel pin (8) is driven by a motor (9) which is arranged in the backrest and can be operated by remote control.

4. A backrest according to any one of claims 1 to 3, **characterised in that** the gap (5) which can be varied between the additional frame (3) and the cover (2) of the backrest frame (1) is covered by a cover patch.

5. A backrest according to claim 4, **characterised in that** the cover patch is firmly joined to an additional cover (4) of the additional frame (3) and is continually stretched by rubber bands or springs joined to the backrest, irrespective of the angular position between additional frame (3) and backrest (1).

6. A backrest according to claim 5, **characterised in that** the cover patch is turned around a wire bracket (7) which is connected to the backrest, espically to the cover (2) of the backrest frame (1).

7. A backrest according to any one of claims 1 to 6, **characterised in that** when the gap (5) is fully closed, the additional cover (4) and the cover (2) are configured such that they are substantially aligned with one another.

8. A backrest according to any one of claims 1 to 7, **characterised in that** a device with a belt deflector (12) is arranged on the backrest frame (1).

9. A backrest according to any one of claims 1 to 8, **characterised in that** the additional frame (3) is arranged in the region of the shoulder blade.

## Revendications

1. Dossier de siège de véhicule comportant un cadre de dossier (1) entouré par un habillage (2) et qui a un appui-tête réglable de manière individuelle en inclinaison par le passager,
un cadre complémentaire (3) étant articulé de manière pivotante autour d'un axe de pivotement (8) sur une tôle latérale (13) ou l'habillage (2) ou le cadre de dossier (1),
- l'axe de pivotement (8) se trouvant dans la zone supérieure du dossier et entre le cadre complémentaire (3), le cadre complémentaire (3) s'étend vers le haut à partir de l'axe de pivotement (8) en position de montage du dossier de siège,
- le cadre complémentaire (3) pouvant être fixé dans différentes positions angulaires par rapport au cadre de dossier (1) et laissant ainsi un intervalle variable (5) entre un habillage complémentaire (4) du cadre complémentaire (3) et l'habillage (2) du cadre de dossier (1),
dossier **caractérisé en ce qu'**
un dispositif de fixation pour un appui-tête est prévu dans la zone supérieure du cadre de dossier (1).

2. Dossier de siège selon la revendication 1,
**caractérisé en ce que**
l'axe de pivotement (8) est pratiquement horizontal dans la position de montage du dossier de siège.

3. Dossier de siège selon la revendication 1 ou 2,
**caractérisé en ce que**
l'axe de pivotement (8) est entraîné par un moteur (9) qui est associé au dossier de siège et se manoeuvre par une télécommande.

4. Dossier de siège selon l'une des revendications 1 à 3,
**caractérisé en ce que**
l'intervalle variable (5) entre le cadre complémentaire (3) et l'habillage (2) du cadre de dossier (1) est couvert par un volet de revêtement.

5. Dossier de siège selon la revendication 4,
**caractérisé en ce que**
le volet de revêtement est relié de manière fixe à l'habillage complémentaire (4) du cadre complémentaire (3) et est tendu en permanence par des bandes en caoutchouc ou des ressorts reliés au dossier de siège, indépendamment de la position angulaire entre le cadre complémentaire (3) et le cadre de dossier (1).

6. Dossier de siège selon la revendication 5,
**caractérisé en ce que**
le volet de revêtement est dévié sur un arceau (7) relié au dossier de siège, notamment à l'habillage (2) du dossier de siège (1).

7. Dossier de siège selon l'une des revendications 1 à 6,
**caractérisé en ce que**
l'habillage complémentaire (4) et le revêtement (2) sont pratiquement alignés lorsque l'intervalle (5) est complètement fermé.

8. Dossier de siège selon l'une des revendications 1 à 7,
**caractérisé en ce que**
le cadre de dossier (1) a un dispositif avec un organe de déviation de ceinture (12).

9. Dossier de siège selon l'une des revendications 1 à 8,
**caractérisé en ce que**
le cadre complémentaire (3) est installé dans la zone de l'omoplate.
